# EUROPÄISCHE PATENTSCHRIFT

(11) **EP 2 869 958 B1**
(45) Veröffentlichungstag und Bekanntmachung des Hinweises auf die Patenterteilung: **23.03.2016**
(21) Anmeldenummer: 13730196.6
(22) Anmeldetag: 14.06.2013
(51) Int. Cl.: B23D 59/00, B27B 9/02

(54) **SCHNITTLÄNGENANZEIGEVORRICHTUNG**
CUT LENGTH INDICATING DEVICE
DISPOSITIF INDICATEUR DE LONGUEUR DE COUPE

(30) Priorität: 04.07.2012 DE 102012211607; 24.10.2012 DE 102012219397
(43) Veröffentlichungstag der Anmeldung: 13.05.2015
(73) Patentinhaber: Robert Bosch GmbH, 70442 Stuttgart (DE)
(72) Erfinder: SINZIG, Bruno, CH-4538 Oberbipp (CH); BERMES, Christian, CH-4500 Solothurn (CH); ARN, Andreas, CH-4513 Langendorf SO (CH)
(86) Internationale Anmeldenummer: PCT/EP2013/062330
(87) Internationale Veröffentlichungsnummer: WO 2014/005820

(56) Entgegenhaltungen:
- EP-A2- 2 163 336
- WO-A1-94/05514
- DE-A1- 4 227 765
- DE-U- 1 887 935
- DE-U1- 9 010 716

## Beschreibung

### Stand der Technik

Es sind bereits Schnittlängenanzeigevorrichtungen für Werkzeugmaschinen bekannt, die eine ein beweglich gelagertes Anzeigeelement umfassende Anzeigeeinheit zu einer Anzeige zumindest einer Position einer Schnittkante eines Bearbeitungswerkzeugs auf einem zu bearbeitenden Werkstück in Abhängigkeit einer eingestellten Schnitttiefe des Bearbeitungswerkzeugs aufweisen.

### Offenbarung der Erfindung

Die Erfindung geht aus von einer Schnittlängenanzeigevorrichtung gemäß dem Oberbegriff des Patentanspruchs 1, für eine Werkzeugmaschine, mit zumindest einer zumindest ein beweglich' gelagertes Anzeigeelement umfassenden Anzeigeeinheit zu einer Anzeige zumindest einer Position einer Schnittkante eines Bearbeitungswerkzeugs auf einem zu bearbeitenden Werkstück in Abhängigkeit einer eingestellten Schnitttiefe des Bearbeitungswerkzeugs.

Eine derartige Schnittlängenanzeigevorrichtung geht beispielsweise aus der EP 2 163 336 A2 hervor.

Die Erfindung sieht eine Schnittlängenanzeigevorrichtung gemäß dem Patentanspruch 1 vor.

Das Anzeigeelement weist besonders bevorzugt in zumindest einem Betriebszustand zu einer Anzeige der Position der Schnittkante eine zumindest im Wesentlichen quer zu einer Schnittebene des Bearbeitungswerkzeugs verlaufende Schnittkantenanzeigelinie auf einem zu bearbeitenden Werkstück auf. Hierbei ist das Anzeigeelement bevorzugt zumindest in der zumindest im Wesentlichen parallel zur Schnittebene des Bearbeitungswerkzeugs verlaufenden Bewegungsebene des Anzeigeelements beweglich gelagert. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Schneidkanten von Schneidzähnen des Bearbeitungswerkzeugs verlaufen vorzugsweise zumindest im Wesentlichen quer zur Schnittebene des Bearbeitungswerkzeugs. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Das Bearbeitungswerkzeug ist vorzugsweise als Kreissägeblatt ausgebildet. Somit übt das Bearbeitungswerkzeug zu einer Einbringung eines Schnitts in das Werkstück vorzugsweise in der Schnittebene des Bearbeitungswerkzeugs eine rotierende Bewegung aus. Die Schnittebene verläuft zu einer Einbringung eines Schnitts in das Werkstück bevorzug zumindest im Wesentlichen quer zu einer Werkstückoberfläche des zu bearbeitenden Werkstücks.

Das Anzeigeelement kann in der Bewegungsebene des Anzeigeelements translatorisch und/oder rotatorisch beweglich gelagert sein. Vorzugsweise ist das Anzeigeelement auf einer bogenförmigen Bahn beweglich gelagert. Die vom Anzeigeelement in zumindest einem Betriebszustand auf dem Werkstück abgebildete Schnittkantenanzeigelinie weist eine maximale Länge auf, die insbesondere länger ist als 2 mm, bevorzugt länger ist als 5 mm und besonders bevorzugt länger ist als 10 mm. Die vom Anzeigeelement in zumindest einem Betriebszustand auf dem Werkstück abgebildete Schnittkantenanzeigelinie wird von einer Quererstreckung, insbesondere von einem Durchmesser, eines Lichtstrahls gebildet. Bei einer Ausgestaltung der Schnittkantenanzeigelinie als eine Quererstreckung eines Lichtstrahls weist die Schnittkantenanzeigelinie vorzugsweise eine maximale Erstreckung auf, die kleiner ist als 2 mm. Hierbei wird die Schnittkantenanzeigelinie von einem von dem Anzeigeelement erzeugten bzw. projizierten Lichtstrahl, insbesondere von einem von dem Anzeigeelement erzeugten bzw. projizierten Laserstrahl gebildet. Bevorzugt verläuft zur Bildung der Schnittkantenanzeigelinie ein von dem Anzeigeelement ausgestrahlter Lichtstrahl, insbesondere ein von dem Anzeigeelement ausgestrahlter Laserstrahl, zumindest teilweise zumindest im Wesentlichen parallel zur Bewegungsebene des Anzeigeelements. Besonders bevorzugt verläuft zur Bildung der Schnittkantenanzeigelinie ein von dem Anzeigeelement ausgestrahlter Lichtstrahl, insbesondere ein von dem Anzeigeelement ausgestrahlter Laserstrahl, zumindest zum Großteil zumindest im Wesentlichen parallel zur Bewegungsebene des Anzeigeelements. Die Schnittkantenanzeigelinie zeigt bevorzugt zumindest einen Austrittspunkt oder Eintrittspurtkt des Bearbeitungswerkzeugs, insbesondere von Schneidkanten des Bearbeitungswerkzeugs, aus einem oder in ein zu bearbeitendes Werkstück auf einer Werkstückoberfläche des Werkstücks an, an dem das Bearbeitungswerkzeug bei einem Bearbeiten des Werkstücks infolge eines Erreichens einer eingestellten Schnitttiefe des Bearbeitungswerkzeugs aus dem Werkstück austreten oder in das Werkstück eintreten würde bzw. aus dem Werkstück austritt oder in das Werkstück eintritt, insbesondere entkoppelt von einer Verfahrbewegung der tragbaren Werkzeugmaschine auf der Werkstückoberfläche des Werkstücks. Das Anzeigeelement bildet die Schnittkantenanzeigelinie vorzugsweise zumindest im Wesentlichen quer, insbesondere zumindest im Wesentlichen senkrecht, zur Schnittebene des Bearbeitungswerkzeugs auf dem Werkstück ab. Mittels der erfindungsgemäßen Ausgestaltung der Schnittlängenanzeigevorrichtung kann einem Bediener vorteilhaft eine Schnittkantenanzeigelinie angezeigt werden, die komfortabel ablesbar ist, insbesondere bei einer Anordnung der Schnittlängenanzeigevorrichtung auf einer einem Bediener abgewandten Seite einer Schutzeinheit der tragbaren Werkzeugmaschine. Zudem kann vorteilhaft einem Bediener bereits vor einem Eintauchen des Bearbeitungswerkzeugs ein Austrittspunkt oder ein Eintrittspunkt des Bearbeitungswerkzeugs aus oder in das Werkstück angezeigt werden, während das Bearbeitungswerkzeüg beispielsweise noch vollständig in eine Schutzeinheit der tragbaren Werkzeugmaschine eingefahren ist.

Des Weiteren wird vorgeschlagen, dass die Anzeigeeinheit zumindest ein weiteres beweglich gelagertes Anzeigeelement aufweist, das in zumindest einem Betriebszustand zu einer Anzeige zumindest einer Position einer weiteren Schnittkante des Bearbeitungswerkzeugs eine weitere zumindest im Wesentlichen quer zu einer Bewegungsebene des weiteren Anzeigeelements verlaufende Schnittkantenanzeigelinie aufweist. Das weitere Anzeigeelement weist besonders bevorzugt in zumindest einem Betriebszustand zu einer Anzeige der Position der weiteren Schnittkante eine weitere zumindest im Wesentlichen quer zu einer Bewegungsebene des Anzeigeelements und/oder zumindest im Wesentlichen quer zu einer Schnittebene des Bearbeitungswerkzeugs verlaufende Schnittkantenanzeigelinie auf. Bevorzugt bildet das weitere Anzeigeelement eine einem Eintrittspunkt des Bearbeitungswerkzeugs entsprechende weitere Schnittkantenanzeigelinie auf dem Werkstück ab. Das Anzeigeelement bildet hierbei vorzugsweise eine einem Austrittspunkt des Bearbeitungswerkzeugs entsprechende Schnittkantenanzeigelinie auf dem Werkstück ab. Es kann besonders vorteilhaft eine Anzeige einer Länge eines in das Werkstück einbringbaren Schnitts des Bearbeitungswerkzeugs, insbesondere entkoppelt von einer Verfahrbewegung der tragbaren Werkzeugmaschine auf der Werkstückoberfläche des Werkstücks, in Abhängigkeit einer eingestellten Schnitttiefe des Bearbeitungswerkzeugs erreicht werden. Somit kann vorteilhaft ein hoher Bedienkomfort für einen Bediener erreicht werden.

Ferner wird vorgeschlagen, dass die Schnittlängenanzeigevorrichtung zumindest eine Bewegungskopplungseinheit umfasst, die das Anzeigeelement und ein weiteres Anzeigeelement der Anzeigeeinheit bewegungsabhängig miteinander verbindet. Unter "bewegungsabhängig verbinden" soll hier insbesondere eine Verbindung von zumindest zwei Elementen mittels eines Mechanismus, wie beispielsweise mittels eines Getriebes oder mittels einer direkten Verbindung, verstanden werden, durch die die zwei Elemente gemeinsam, insbesondere zumindest im Wesentlichen zeitgleich, bewegt werden. Die Bewegungskopplungseinheit kann hierbei als Zahnstangenkopplungseinheit, als Stangenkopplungseinheit, als Zahnradkopplungseinheit usw. ausgebildet sein, die das Anzeigeelement und das weitere Anzeigeelement bewegungsabhängig miteinander verbindet. Mittels der erfindungsgemäßen Ausgestaltung kann vorteilhaft eine gemeinsame Bewegung des Anzeigeelements und des weiteren Anzeigeelements erreicht werden. Es kann vorteilhaft eine einfache Einstellung einer Position des Anzeigeelements und einer Position des weiteren Anzeigeelements erfolgen. Somit kann vorteilhaft präzise und einfach eine Änderung einer Position des Anzeigeelements auf das weitere Anzeigeelement übertragen werden, wodurch eine Position des weiteren Anzeigeelements in Abhängigkeit einer Position des Anzeigeelements geändert werden kann.

Zudem wird vorgeschlagen, dass die Schnittlängenanzeigevorrichtung zumindest eine Bewegungskopplungseinheit umfasst, die zumindest ein Bewegungskopplungselement aufweist, das gelenkig mit einem Führungselement der Bewegungskopplungseinheit verbunden ist, an dem das Anzeigeelement angeordnet ist. Unter einem "Führungselement" soll hier insbesondere ein Element verstanden werden, das zumindest mit einem weiteren Element zusammenwirkt, um ein Bauteil bei einer Bewegung entlang einer vorgegebenen Bahn mittels einer Einwirkung von zumindest einer Zwangskraft quer zu einer Bewegungsrichtung zu führen. Unter einer "Zwangskraft" soll hier insbesondere eine Kraft verstanden werden, die dazu vorgesehen ist, ein Bauteil an einer Bewegung in zumindest eine Richtung zu hindern und/oder das Bauteil bei einer Bewegung auf einer mittels einer Einwirkung der Kraft auf das Bauteil vorgegebenen Bahn zu halten. Unter "vorgesehen" soll insbesondere speziell programmiert, ausgelegt und/oder ausgestattet verstanden werden. Das Führungselement ist bevorzugt schwenkbar bzw. drehbar am Bewegungskopplungselement gelagert. Mittels der erfindungsgemäßen Ausgestaltung kann konstruktiv einfach eine Bewegung des Anzeigeelements geführt werden. Zudem kann konstruktiv einfach eine Bewegungskopplung des Anzeigeelements in Abhängigkeit eines weiteren Elements, insbesondere eines Schnitttiefeneinstellelements einer Schnitttiefeneinstelleinheit der tragbaren Werkzeugmaschine, erreicht werden.

Des Weiteren wird vorgeschlagen, dass das Führungselement mit einem vom Bewegungskopplungselement abgewandten Ende in zumindest einer Führungsausnehmung der Bewegungskopplungseinheit geführt ist. Der Ausdruck "Führungsausnehmung" soll hier insbesondere eine Ausnehmung definieren, die dazu vorgesehen ist, ein Bauteil bei einer Bewegung entlang einer vorgegebenen Bahn mittels einer Einwirkung von zumindest einer Zwangskraft quer zu einer Bewegungsrichtung zu führen. Besonders bevorzugt greift das Führungselement in die Führungsausnehmung ein. Das Anzeigeelement wird somit bevorzugt mittels eines Zusammenwirkens des Führungselements und der Führungsausnehmung der Bewegungskopplungseinheit bei einer Bewegung des Anzeigeelements entlang einer vorgegebenen Bahn geführt. Es ist jedoch auch denkbar, dass das Anzeigeelement mittels eines Zusammenwirkens des Führungselements und einer Führungsrippe der Bewegungskopplungseinheit bei einer Bewegung des Anzeigeelements entlang einer vorgegebenen Bahn geführt wird. Mittels der erfindungsgemäßen Ausgestaltung der Schnittlängenanzeigevorrichtung kann vorteilhaft eine präzise Führung des Anzeigeelements erreicht werden. Somit kann vorteilhaft eine genaue Einstellung einer Position des Anzeigeelements erreicht werden.

Ferner wird vorgeschlagen, dass die Schnittlängenanzeigevorrichtung zumindest eine Bewegungskopplungseinheit aufweist, die zumindest eine Führungsausnehmung umfasst, die einen bogenförmigen Verlauf aufweist. Hierbei weist die Führungsausnehmung bevorzugt, betrachtet entlang einer Gesamterstreckung der Führungsausnehmung, einen bogenförmigen Verlauf auf. Somit ist die Führungsausnehmung als Kurvenbahn bzw. als bogenförmige Kulisse ausgestaltet. Es ist jedoch auch denkbar, dass die Führungsausnehmung lediglich in einem Teilbereich einen bogenförmigen Verlauf aufweist, der ausgehend von einem geradlinigen Teilbereich oder ausgehend von einem verschieden von einem geradlinig verlaufenden Teilbereich ausgebildeten Teilbereich verläuft. Ferner ist es denkbar, dass die Bewegungskopplungseinheit alternativ zur Führungsausnehmung zumindest eine Führungsstange umfasst, die einen bogenförmigen Verlauf oder einen geradlinigen Verlauf aufweist und an der das Anzeigeelement und/oder das weitere Anzeigeelement beweglich gelagert sind/ist. Insbesondere mittels eines geradlinigen Verlaufs der Führungsstange kann vorteilhaft ein konstanter Abstand des Anzeigeelements und/oder des weiteren Anzeigeelements relativ zu einer Auflageeinheit und/oder einer Schnittebene der tragbaren Werkzeugmaschine erreicht werden, der vorteilhaft unabhängig von einer Anzeigeposition des Anzeigeelements und/oder des weiteren Anzeigeelements relativ zueinander ist. Mittels der erfindungsgemäßen Ausgestaltung der Schnittlängenanzeigevorrichtung kann vorteilhaft eine präzise und konstruktiv einfache Ausrichtung des Anzeigeelements in Abhängigkeit einer Bewegung eines Schnitttiefeneinstellelements einer Schnitttiefeneinstelleinheit der tragbaren Werkzeugmaschine erreicht werden.

Zudem wird vorgeschlagen, dass die Anzeigeeinheit als Laseranzeigeeinheit ausgebildet ist. Somit sind das Anzeigeelement und das weitere Anzeigeelement bevorzugt jeweils als Laseranzeigeelement ausgebildet. Das Anzeigeelement und das weitere Anzeigeelement sind bevorzugt als Laserdioden ausgebildet. Vorzugsweise projizieren das Anzeigeelement und das weitere Anzeigeelement die Schnittkantenanzeigelinie und die weitere Schnittkantenanzeigelinie in zumindest einem Betriebszustand auf das zu bearbeitende Werkstück. Somit bildet das Anzeigeelement besonders bevorzugt in zumindest einem Betriebszustand zu einer Anzeige der Position der weiteren Schnittkante eine zumindest im Wesentlichen quer zu einer Schnittebene des Bearbeitungswerkzeugs verlaufende Schnittkantenanzeigelinie auf einem zu bearbeitenden Werkstück ab. Ferner bildet somit das weitere Anzeigeelement besonders bevorzugt in zumindest einem Betriebszustand zu einer Anzeige der Position der weiteren Schnittkante eine weitere zumindest im Wesentlichen quer zu einer Bewegungsebene des Anzeigeelements und/oder zumindest im Wesentlichen quer zu einer Schnittebene des Bearbeitungswerkzeugs verlaufende Schnittkantenanzeigelinie auf einem zu bearbeitenden Werkstück ab. Es kann eine besonders komfortabel ablesbare Schnittlängenanzeigevorrichtung realisiert werden.

Des Weiteren geht die Erfindung aus von einer tragbaren Werkzeugmaschine, insbesondere einer Kreissäge, mit zumindest einer Schnitttiefeneinstelleinheit zu einer Einstellung einer Schnitttiefe eines Bearbeitungswerkzeugs und mit zumindest einer erfindungsgemäßen Schnittlängenanzeigevorrichtung. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt ist die tragbare Werkzeugmaschine als Tauchkreissäge ausgebildet. Es ist jedoch auch denkbar, dass die Werkzeugmaschine eine andere, einem Fachmann als sinnvoll erscheinende Ausgestaltung aufweist. Die Schnitttiefeneinstelleinheit ist bevorzugt dazu vorgesehen, eine Schnitttiefe des mit einer Werkzeugaufnahme der tragbaren Werkzeugmaschine koppelbaren Bearbeitungswerkzeugs einzustellen. Der Ausdruck "Schnitttiefeneinstelleinheit" soll hier insbesondere eine Einheit definieren, die dazu vorgesehen ist, eine Eintauchstrecke des mit der Werkzeugaufnahme der tragbaren Werkzeugmaschine verbundenen Bearbeitungswerkzeugs, insbesondere eines Kreissägeblatts, in ein zu bearbeitendes Werkstück zu begrenzen und/oder eine Länge einer Eintauchstrecke des Bearbeitungswerkzeugs in das zu bearbeitende Werkstück einzustellen. Die Eintauchstrecke des Bearbeitungswerkzeugs in das zu bearbeitende Werkstück wird hierbei insbesondere entlang einer zumindest im Wesentlichen senkrecht zu einer Auflagefläche einer Auflageeinheit der tragbaren Werkzeugmaschine, mit der die tragbare Werkzeugmaschine auf einer Werkstückoberfläche eines zu bearbeitenden Werkstücks aufliegt, verlaufenden Richtung betrachtet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung der tragbaren Werkzeugmaschine kann vorteilhaft eine präzise Bearbeitung eines Werkstücks mittels der tragbaren Werkzeugmaschine erreicht werden.

Ferner wird vorgeschlagen, dass die Schnittlängenanzeigevorrichtung zumindest die Bewegungskopplungseinheit umfasst, die dazu vorgesehen ist, zumindest das Anzeigeelement in Abhängigkeit einer Bewegung eines Schnitttiefeneinstellelements der Schnitttiefeneinstelleinheit zu bewegen. Das Schnitttiefeneinstellelement ist besonders bevorzugt als Tiefenanschlag ausgebildet, der eine Eintauchstrecke des mit einer Werkzeugaufnahme der tragbaren Werkzeugmaschine verbundenen Bearbeitungswerkzeugs, insbesondere eines Kreissägeblatts, in das zu bearbeitende Werkstück begrenzt und/oder mittels dessen eine Länge der Eintauchstrecke einstellbar ist. Mittels der erfindungsgemäßen Ausgestaltung kann vorteilhaft eine Kopplung des Anzeigeelements mit dem Schnitttiefeneinstellelement erreicht werden. Somit kann vorteilhaft eine von einer Position des Schnitttiefeneinstellelements abhängige Einstellung einer Position des Anzeigeelements erreicht werden. Es kann hierdurch vorteilhaft eine präzise Anzeige einer Schnittlänge des Bearbeitungswerkzeugs in Abhängigkeit einer eingestellten Schnitttiefe des Bearbeitungswerkzeugs erreicht werden.

Zudem wird vorgeschlagen, dass die Schnitttiefeneinstelleinheit zumindest ein beweglich gelagertes Schnitttiefeneinstellelement umfasst, das mit einem Bewegungskopplungselement einer Bewegungskopplungseinheit der Schnittlängenanzeigevorrichtung verbunden ist. Das Bewegungskopplungselement greift hierbei vorzugsweise eine Bewegung des Schnitttiefeneinstellelements ab und überträgt die Bewegung, insbesondere über ein Führungselement der Bewegungskopplungseinheit, an das Anzeigeelement. Somit kann konstruktiv einfach eine Bewegungsabhängigkeit zwischen dem Schnitttiefeneinstellelement und dem Anzeigeelement realisiert werden.

Die erfindungsgemäße Schnittlängenanzeigevorrichtung und/oder die erfindungsgemäße Werkzeugmaschine soll/sollen hierbei nicht auf die oben beschriebene Anwendung und Ausführungsform beschränkt sein. Insbesondere können die erfindungsgemäße Schnittlängenanzeigevorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Detailansicht einer erfindungsgemäßen tragbaren Werkzeugmaschine, die eine erfindungsgemäße Schnittlängenanzeigevorrichtung aufweist, und ein Werkzeugmaschinenführungssystem in einer schematischen Darstellung,
- Fig. 2: eine weitere Detailansicht der erfindungsgemäßen tragbaren Werkzeugmaschine, die die erfindungsgemäße Schnittlängenanzeigevorrichtung aufweist, und das Werkzeugmaschinenführungssystem aus Figur 1 in einer schematischen Darstellung,
- Fig. 3: eine Detailansicht einer Führungsausnehmung und einer weiteren Führungsausnehmung einer Bewegungskopplungseinheit der erfindungsgemäßen Schnittlängenanzeigevorrichtung in einer schematischen Darstellung,
- Fig. 4: eine Prinzipskizze der erfindungsgemäßen Schnittlängenanzeigevorrichtung in einer schematischen Darstellung,
- Fig. 5: eine Detailansicht einer erfindungsgemäßen tragbaren Werkzeugmaschine, die eine alternative erfindungsgemäße Schnittlängenanzeigevorrichtung aufweist, in einer schematischen Darstellung,
- Fig. 6: eine Prinzipskizze der alternativen erfindungsgemäßen Schnittlängenanzeigevorrichtung aus Figur 5 in einer schematischen Darstellung,
- Fig. 7: eine Detailansicht einer erfindungsgemäßen tragbaren Werkzeugmaschine, die eine weitere, alternative erfindungsgemäße Schnittlängenanzeigevorrichtung aufweist, in einer schematischen Darstellung,
- Fig. 8: eine Detailansicht der weiteren, alternativen erfindungsgemäßen Schnittlängenanzeigevorrichtung aus Figur 7 in einer schematischen Darstellung,
- Fig. 9: eine Detailansicht eines Anbindungsbereichs der weiteren, alternativen erfindungsgemäßen Schnittlängenanzeigevorrichtung an eine Schnitttiefeneinstelleinheit einer tragbaren Werkzeugmaschine in einer schematischen Darstellung,
- Fig. 10: eine Prinzipskizze der weiteren, alternativen erfindungsgemäßen Schnittlängenanzeigevorrichtung aus Figur 7 in einer schematischen Darstellung,
- Fig. 11: eine Prinzipskizze einer weiteren, alternativen erfindungsgemäßen Schnittlängenanzeigevorrichtung in einer schematischen Darstellung und
- Fig. 12: eine Prinzipskizze einer weiteren, alternativen erfindungsgemäßen Schnittlängenanzeigevorrichtung in einer schematischen Darstellung.

### Beschreibung der Ausführungsbeispiele

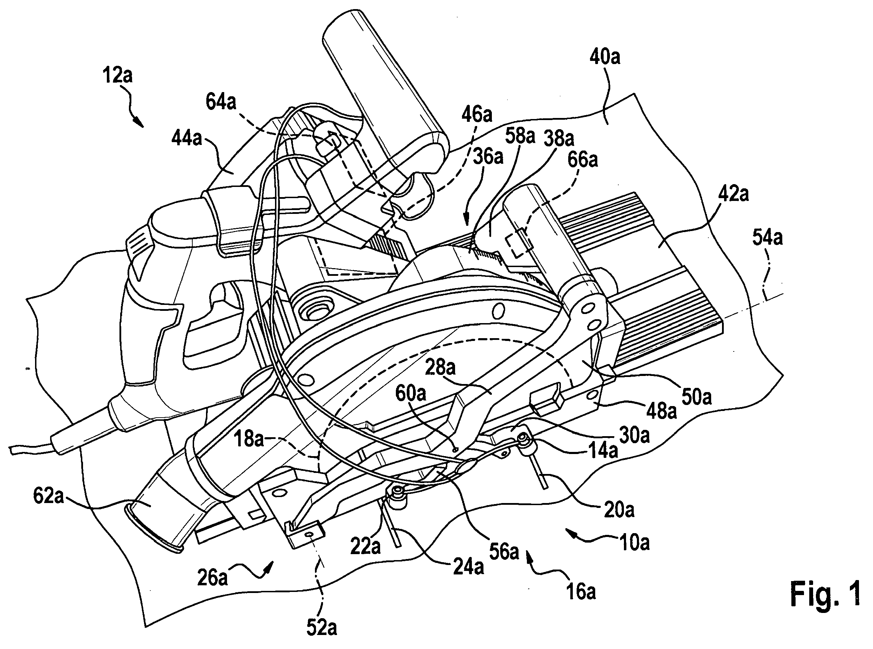

Figur 1 zeigt ein Werkzeugmaschinenbearbeitungssystem, das zumindest eine als Tauchkreissäge ausgebildete tragbare Werkzeugmaschine 12a und zumindest eine als Führungsschiene ausgebildete Werkzeugmaschinenführungsvorrichtung 42a umfasst. Die als Tauchkreissäge ausgebildete tragbare Werkzeugmaschine 12a umfasst zumindest eine Schnitttiefeneinstelleinheit 36a zu einer Einstellung einer Schnitttiefe eines Bearbeitungswerkzeugs 18a und zumindest eine Schnittlängenanzeigevorrichtung 10a. Mittels einer Einstellung einer Position eines Schnitttiefeneinstellelements 38a kann eine Schnitttiefe des Bearbeitungswerkzeugs 18a auf eine, einem Fachmann bereits bekannte Art und Weise eingestellt werden. Das Bearbeitungswerkzeug 18a ist mit einer Werkzeugaufnahme (hier nicht näher dargestellt) der tragbaren Werkzeugmaschine 12a verbunden. Die tragbare Werkzeugmaschine 12a umfasst ferner ein Werkzeugmaschinengehäuse 44a, das dazu vorgesehen ist, eine Antriebseinheit 46a der tragbaren Werkzeugmaschine 12a zu umschließen. Die Antriebseinheit 46a umfasst eine Antriebswelle (hier nicht näher dargestellt), die zu einem Antrieb des mit der Werkzeugaufnahme koppelbaren Bearbeitungswerkzeugs 18a auf eine, einem Fachmann bereits bekannte Art und Weise vorgesehen ist.

Ferner umfasst die tragbare Werkzeugmaschine 12a eine als Grundplatte oder als Gleitschuh ausgebildete Auflageeinheit 48a mit der die tragbare Werkzeugmaschine 12a bei einer Bearbeitung eines Werkstücks 40a auf einer Werkstückoberfläche des Werkstücks 40a oder auf einer Oberfläche der als Führungsschiene ausgebildeten Werkzeugmaschinenführungsvorrichtung 42a aufliegt bzw. bei einer Bewegung zu einer Einbringung eines Schnitts in das Werkstück 40a auf der Werkstückoberfläche oder der Oberfläche der als Führungsschiene ausgebildeten Werkzeugmaschinenführungsvorrichtung 42a gleitet. Die Auflageeinheit 48a ist hierbei auf eine, einem Fachmann bereits bekannte Art und Weise mit der als Führungsschiene ausgebildeten Werkzeugmaschinenführungsvorrichtung 42a koppelbar. An der Auflageeinheit 48a ist zudem eine Schutzeinheit 50a der tragbaren Werkzeugmaschine 12a angeordnet, die einen Bediener vor Verletzungen bei einer Bearbeitung des Werkstücks 40a schützt. Hierbei ist die Schutzeinheit 50a als Schutzhaube ausgebildet, die das Bearbeitungswerkzeug 18a in einem montierten Zustand entlang einer Rotationsrichtung der Antriebswelle um mehr als 160° umschließt. Die Schutzeinheit 50a weist ferner ein Absaugkopplungselement 62a auf, das mit einer Absaugeinheit (hier nicht näher dargestellt) zu einer Absaugung von abgetragenen Werkstückpartikeln während einer Bearbeitung des Werkstücks 40a verbindbar ist. Das Werkzeugmaschinengehäuse 44a ist relativ zur Auflageeinheit 48a schwenkbar an der Schutzeinheit 50a gelagert. Hierbei ist das Werkzeugmaschinengehäuse 44a auf eine, einem Fachmann bereits bekannte Art und Weise um eine Tauchschwenkachse 52a relativ zur Auflageeinheit 48a schwenkbar an der Schutzeinheit 50a gelagert. Ferner ist das Werkzeugmaschinengehäuse 44a zusammen mit der Schutzeinheit 50a auf eine, einem Fachmann bereits bekannte Art und Weise um eine Neigeschwenkachse 54a relativ zur Auflageeinheit 48a schwenkbar an der Auflageeinheit 48a gelagert. Die Tauchschwenkachse 52a erstreckt sich zumindest im Wesentlichen senkrecht relativ zur Neigeschwenkachse 54a. Zudem ist die Schnitttiefeneinstelleinheit 36a an einer dem Werkzeugmaschinengehäuse 44a zugewandten Seite der Schutzeinheit 50a angeordnet.

Die Schnittlängenanzeigevorrichtung 10a für die tragbare Werkzeugmaschine 12a weist zumindest eine zumindest ein beweglich gelagertes Anzeigeelement 14a umfassende Anzeigeeinheit 16a zu einer Anzeige zumindest einer Position einer Schnittkante des Bearbeitungswerkzeugs 18a auf dem zu bearbeitenden Werkstück 40a in Abhängigkeit einer eingestellten Schnitttiefe des Bearbeitungswerkzeugs 18a auf. Die Schnitttiefe des Bearbeitungswerkzeugs 18a ist mittels der Schnitttiefeneinstelleinheit 36a einstellbar. Das Anzeigeelement 14a weist in zumindest einem Betriebszustand zu einer Anzeige der Position der Schnittkante eine zumindest im Wesentlichen quer zu einer Bewegungsebene des Anzeigeelements 14a verlaufende Schnittkantenanzeigelinie 20a auf. Ferner weist die Anzeigeeinheit 16a zumindest ein weiteres beweglich gelagertes Anzeigeelement 22a auf, das in zumindest einem Betriebszustand zu einer Anzeige zumindest einer Position einer weiteren Schnittkante des Bearbeitungswerkzeugs 18a eine weitere zumindest im Wesentlichen quer zu einer Bewegungsebene des weiteren Anzeigeelements 22a verlaufende Schnittkantenanzeigelinie 24a aufweist. Die Anzeigeeinheit 16a ist als Laseranzeigeeinheit ausgebildet. Das Anzeigeelement 14a und das weitere Anzeigeelement 22a sind somit als Laseranzeigeelemente ausgebildet. Das Anzeigeelement 14a bildet in zumindest einem Betriebszustand zu einer Anzeige der Position der Schnittkante die zumindest im Wesentlichen quer zu einer Bewegungsebene des Anzeigeelements 14a und/oder zumindest im Wesentlichen quer zu einer Schnittebene des Bearbeitungswerkzeugs 18a verlaufende Schnittkantenanzeigelinie 20a auf dem zu bearbeitenden Werkstück 40a ab. Die Schnittkantenanzeigelinie 20a des Anzeigeelements 14a wird hierbei von einer Laserlinie gebildet. Das weitere Anzeigeelement 22a bildet in zumindest einem Betriebszustand zu einer Anzeige der Position der Schnittkante die weitere zumindest im Wesentlichen quer zu einer Bewegungsebene des weiteren Anzeigeelements 22a und/oder zumindest im Wesentlichen quer zur Schnittebene des Bearbeitungswerkzeugs 18a verlaufende Schnittkantenanzeigelinie 24a auf dem zu bearbeitenden Werkstück 40a ab. Die Schnittkantenanzeigelinie 24a des weiteren Anzeigeelements 22a wird ebenfalls von einer Laserlinie gebildet. In einer hier nicht näher dargestellten Ausgestaltung der Anzeigeeinheit 16a werden die Schnittkantenanzeigelinie 20a des Anzeigeelements 14a und die Schnittkantenanzeigelinie 24a des weiteren Anzeigeelements 22a jeweils von einem Laserpunkt bzw. von einer Quererstreckung eines Laserstrahls gebildet, wobei der Laserstrahl zumindest im Wesentlichen parallel zur Bewegungsebene des Anzeigeelements 14a bzw. des weiteren Anzeigeelements 22a verläuft. Das Anzeigeelement 14a und das weitere Anzeigeelement 22a werden zu einer Erzeugung von Laserstrahlen durch eine Energieeinheit 64a der Schnittlängenanzeigevorrichtung 10a bzw. der tragbaren Werkzeugmaschine 12a mit Energie versorgt. Hierbei kann die Energieeinheit 64a von einem separaten Akkumulator-Paket gebildet sein oder die Energieeinheit 64a ist elektrisch mit einer Energieversorgungseinheit (hier nicht näher dargestellt) der tragbaren Werkzeugmaschine 12a elektrisch verbunden.

Die von dem Anzeigeelement 14a auf dem Werkstück 40a abgebildete Schnittkantenanzeigelinie 20a ist hierbei dazu vorgesehen, eine Position einer, betrachtet entlang einer entgegen einer Bewegungsrichtung der tragbaren Werkzeugmaschine 12a zu einer Einbringung eines Schnitts in das Werkstück 40a verlaufenden Richtung, vorderen Schnittkante des Bearbeitungswerkzeugs 18a auf dem zu bearbeitenden Werkstück 40a anzuzeigen. Die vordere Schnittkante des Bearbeitungswerkzeugs 18a entspricht einer vorderen Austrittskante von Schneidkanten des Bearbeitungswerkzeugs 18a aus dem zu bearbeitenden Werkstück 40a bei einem Erreichen einer mittels der Schnitttiefeneinstelleinheit 36a eingestellten Schnitttiefe des Bearbeitungswerkzeugs 18a. Die weitere Schnittkantenanzeigelinie 24a ist dazu vorgesehen, eine Position einer, betrachtet entlang der entgegen der Bewegungsrichtung der tragbaren Werkzeugmaschine 12a zu einer Einbringung eines Schnitts in das Werkstück 40a verlaufenden Richtung, hinteren Schnittkante des Bearbeitungswerkzeugs 18a auf dem zu bearbeitenden Werkstück 40a anzuzeigen. Die hintere Schnittkante des Bearbeitungswerkzeugs 18a entspricht einer hinteren Eintrittskante von Schneidkanten des Bearbeitungswerkzeugs 18a in das zu bearbeitende Werkstück 40a bei einem Erreichen einer mittels der Schnitttiefeneinstelleinheit 36a eingestellten Schnitttiefe des Bearbeitungswerkzeugs 18a.

Des Weiteren umfasst die Schnittlängenanzeigevorrichtung 10a zumindest eine Bewegungskopplungseinheit 26a, die das Anzeigeelement 14a und das weitere Anzeigeelement 22a der Anzeigeeinheit 16a bewegungsabhängig miteinander verbindet (Figuren 1 bis 4). Die Bewegungskopplungseinheit 26a weist zumindest ein Bewegungskopplungselement 28a auf, das gelenkig mit einem Führungselement 30a der Bewegungskopplungseinheit 26a verbunden ist, an dem das Anzeigeelement 14a angeordnet ist. Ferner weist die Bewegungskopplungseinheit 26a zumindest ein weiteres gelenkig mit dem Bewegungskopplungselement 28a verbundenen Führungselements 56a auf, an dem das weitere Anzeigeelement 22a angeordnet ist. Das Bewegungskopplungselement 28a ist als Bewegungskopplungsstange ausgebildet. Es ist jedoch auch denkbar, dass das Bewegungskopplungselement 28a eine andere, einem Fachmann als sinnvoll erscheinende Ausgestaltung aufweist, wie beispielsweise eine Ausgestaltung als Zahnrad, als Zahnstange, als Kurvengetriebeelement usw. Das Bewegungskopplungselement 28a ist mit einem Ende schwenkbar an der Auflageeinheit 48a und/oder an der Schutzeinheit 50a gelagert. Die Schwenkachse des Bewegungskopplungselements 28a verläuft koaxial zur Tauchschwenkachse 52a des Werkzeugmaschinengehäuses 44a. Mit einem weiteren Ende des Bewegungskopplungselements 28a ist das Bewegungskopplungselement 28a mit dem Schnitttiefeneinstellelement 38a der Schnitttiefeneinstelleinheit 36a verbunden.

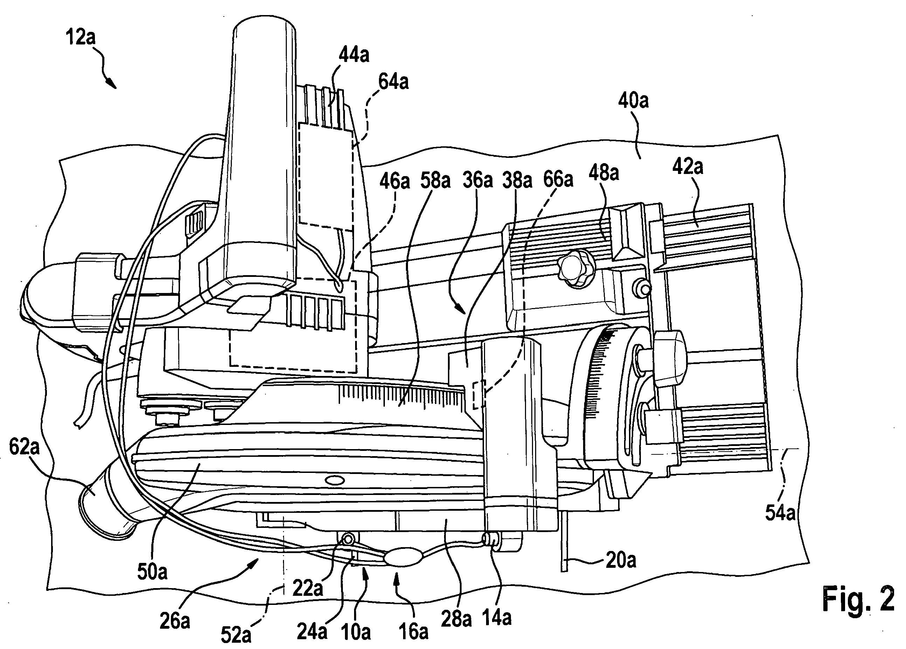

Das Schnitttiefeneinstellelement 38a ist zu einer Einstellung einer Schnitttiefe des Bearbeitungswerkzeugs 18a beweglich an einem Führungsbahnelement 58a der Schnitttiefeneinstelleinheit 36a gelagert (Figur 2). Somit weist die Schnitttiefeneinstelleinheit 36a zumindest das beweglich gelagerte Schnitttiefeneinstellelement 38a auf, das mit dem Bewegungskopplungselement 28a der Bewegungskopplungseinheit 26a der Schnittlängenanzeigevorrichtung 10a verbunden ist. Das Führungsbahnelement 58a ist an einer dem Werkzeugmaschinengehäuse 44a zugewandten Seite der Schutzeinheit 50a angeordnet. Bei einer Bewegung des Schnitttiefeneinstellelements 38a relativ zum Führungsbahnelement 58a wird das Bewegungskopplungselement 28a infolge der Verbindung mit dem Schnitttiefeneinstellelement 38a ebenfalls relativ zum Führungsbahnelement 58a entlang eines Verlaufs des Führungsbahnelements 58a bewegt.

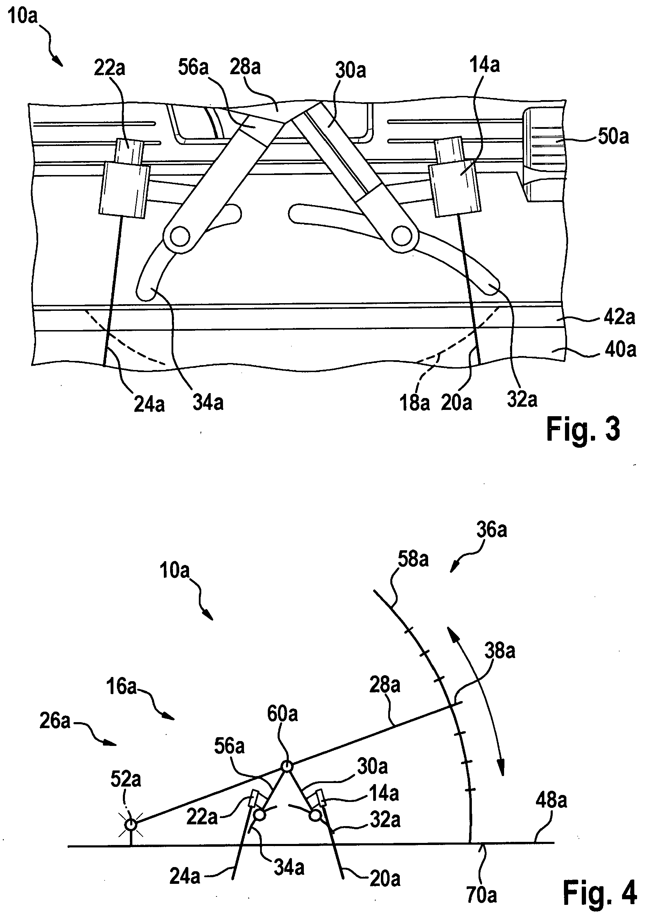

Das Führungselement 30a und das weitere Führungselement 56a sind mittels eines Lagerbolzenelements 60a der Bewegungskopplungseinheit 26a gelenkig mit dem Bewegungskopplungselement 28a verbunden (Figuren 1 und 4). Zudem ist das Führungselement 30a mit einem vom Bewegungskopplungselement 28a abgewandten Ende in zumindest einer Führungsausnehmung 32a der Bewegungskopplungseinheit 26a geführt. Das weitere Führungselement 56a ist ebenfalls mit einem vom Bewegungskopplungselement 28a abgewandten Ende in zumindest einer weiteren Führungsausnehmung 34a der Bewegungskopplungseinheit 26a geführt. Die Führungsausnehmung 32a weist einen bogenförmigen Verlauf auf. Die weitere Führungsausnehmung 34a weist ebenfalls einen bogenförmigen Verlauf auf (Figur 3). Hierbei weisen die Führungsausnehmung 32a und die weitere Führungsausnehmung 34a, betrachtet entlang einer von der Auflageeinheit 48a ausgehenden und hin zum Werkzeugmaschinengehäuse 44a gerichteten Richtung, eine konvexe Ausgestaltung aus. Der bogenförmige Verlauf der Führungsausnehmung 32a und der bogenförmige Verlauf der weiteren Führungsausnehmung 34a sind derart ausgebildet, dass das Anzeigeelement 14a und das weitere Anzeigeelement 22a mittels des Bewegungskopplungselements 28a relativ zueinander in Abhängigkeit einer Bewegung des Schnitttiefeneinstellelements 38a bewegt werden, um Schnittkantenanzeigelinien 20a, 24a zu bilden, die exakt auf eine Austritts- bzw. Eintrittsschnittkante des Bearbeitungswerkzeug 18a ausgerichtet sind, die das Bearbeitungswerkzeug 18a entkoppelt von einer Verfahrbewegung nach einem Anschlagen am Schnitttiefeneinstellelement 38a in der Tauchposition im Werkstück 40a erzeugt bzw. zwischen welchen Punkten das Bearbeitungswerkzeug 18a zu einer Einbringung eines Schnitts in das Werkstück 40a aus der Schutzeinheit 50a und/oder aus der Auflageeinheit 48a nach einem Anschlagen am Schnitttiefeneinstellelement 38a in der Tauchposition herausragt.

Infolge eines Einstellens einer gewünschten maximalen Schnitttiefe des Bearbeitungswerkzeugs 18a mittels der Schnitttiefeneinstelleinheit 36a werden das Anzeigeelement 14a und das weitere Anzeigeelement 22a relativ zueinander bewegt. Hierbei wird durch das Bewegungskopplungselement 28a eine Bewegung des Schnitttiefeneinstellelements 38a relativ zum Führungsbahnelement 58a abgegriffen. Das Bewegungskopplungselement 28a wird somit zusammen mit dem Schnitttiefeneinstellelement 38a relativ zum Führungsbahnelement 58a bewegt. Hierbei wird die Bewegung des Bewegungskopplungselements 28a mittels der Verbindung des Bewegungskopplungselements 28a, des Führungselements 30a und des weiteren Führungselements 56a auf das Anzeigeelement 14a und das weitere Anzeigeelement 22a übertragen. Infolge der Führung des Führungselements 30a in der Führungsausnehmung 32a und infolge der Führung des weiteren Führungselements 56a in der weiteren Führungsausnehmung 34a werden das Anzeigeelement 14a und das weitere Anzeigeelement 22a in Abhängigkeit einer Bewegung des Schnitttiefeneinstellelements 38a bewegt. Ein Abstand zwischen der von dem Anzeigeelement 14a gebildeten Schnittkantenanzeigelinie 20a und der weiteren von dem weiteren Anzeigeelement 22a gebildeten Schnittkantenanzeigelinie 24a entsprechen hierbei einer Länge eines Schnitts des Bearbeitungswerkzeugs 18a, sollte das Bearbeitungswerkzeug 18a bis zu einem Anschlagen des Werkzeugmaschinengehäuses 44a am Schnitttiefeneinstellelements 38a um die Tauchschwenkachse 52a geschwenkt werden. Somit umfasst die Schnittlängenanzeigevorrichtung 10a zumindest die Bewegungskopplungseinheit 26a, die dazu vorgesehen ist, zumindest das Anzeigeelement 14a und das weitere Anzeigeelement 22a in Abhängigkeit einer Bewegung des Schnitttiefeneinstellelements 38a der Schnitttiefeneinstelleinheit 36a zu bewegen. Figur 4 zeigt hierzu eine Prinzipskizze der Bewegungskopplungseinheit 26a zu einer Bewegung des Anzeigeelements 14a und des weiteren Anzeigeelements 22a in Abhängigkeit einer Bewegung des Schnitttiefeneinstellelements 38a.

Des Weiteren weist die Schnittlängenanzeigevorrichtung 10a zumindest eine Führungsschienendifferenzausgleichseinheit 66a auf, die dazu vorgesehen ist, eine Stärke der Werkzeugmaschinenführungsvorrichtung 42a bei einer Anzeige der Schnittkantenanzeigelinien 20a, 24a zu berücksichtigen. Die Führungsschienendifferenzausgleichseinheit 66a kann elektronisch und/oder mechanisch ausgebildet sein. Somit wird sichergestellt, dass die durch das Anzeigeelement 14a und das weitere Anzeigeelement 22a gebildeten Schnittkantenanzeigelinien 20a, 24a unabhängig von einem Gebrauch oder einem Nichtgebrauch der Werkzeugmaschinenführungsvorrichtung 42a zusammen mit der tragbaren Werkzeugmaschine 12a exakt auf eine Austritts- bzw. Eintrittsschnittkante des Bearbeitungswerkzeugs 18a ausgerichtet sind. Es ist jedoch auch denkbar, dass die Schnittlängenanzeigevorrichtung 10a entkoppelt von der Führungsschienendifferenzausgleichseinheit 66a ausgebildet ist und bereits bei einer werkseitigen Montage der Schnittlängenanzeigevorrichtung 10a für eine Nutzung der Schnittlängenanzeigevorrichtung 10a bzw. der tragbaren Werkzeugmaschine 12a und der Schnittlängenanzeigevorrichtung 10a mit einer Werkzeugmaschinenführungsvorrichtung 42a ausgelegt ist. Hierbei würde eine Stärke der Werkzeugmaschinenführungsvorrichtung 42a bei einer Bewegung des Anzeigeelements 14a und des weiteren Anzeigeelements 22a in Abhängigkeit des Schnitttiefeneinstellelements 38a bereits bei einer Auslegung der Führungsausnehmung 32a und der weiteren Führungsausnehmung 34a berücksichtigt sein.

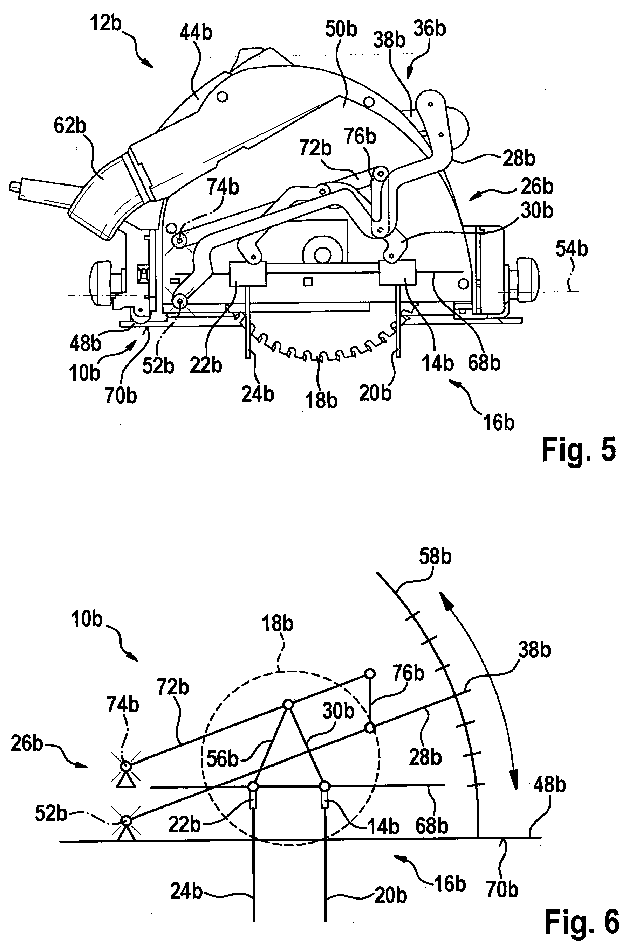

In Figuren 5 bis 11 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis c hinzugefügt. Die nachfolgende Beschreibung beschränkt sich im Wesentlichen auf die Unterschiede zu dem in den Figuren 1 bis 4 beschriebenen ersten Ausführungsbeispiel, wobei bezüglich gleichbleibender Bauteile, Merkmale und Funktionen auf die Beschreibung des ersten Ausführungsbeispiels in den Figuren 1 bis 4 verwiesen werden kann.

Figur 5 zeigt eine als Tauchkreissäge ausgebildete tragbare Werkzeugmaschine 12b, die zumindest eine Schnitttiefeneinstelleinheit 36b zu einer Einstellung einer Schnitttiefe eines Bearbeitungswerkzeugs 18b und zumindest eine Schnittlängenanzeigevorrichtung 10b umfasst. Die tragbare Werkzeugmaschine 12b weist eine zumindest im Wesentlichen analoge Ausgestaltung zu der in den Figuren 1 bis 4 beschriebenen tragbaren Werkzeugmaschine 12a auf. Die Schnittlängenanzeigevorrichtung 10b für die tragbare Werkzeugmaschine 12b umfasst zumindest eine zumindest ein beweglich gelagertes Anzeigeelement 14b umfassende Anzeigeeinheit 16b zu einer Anzeige zumindest einer Position einer Schnittkante des Bearbeitungswerkzeugs 18b auf einem zu bearbeitenden Werkstück (hier nicht näher dargestellt) in Abhängigkeit einer eingestellten Schnitttiefe des Bearbeitungswerkzeugs 18b. Die Schnitttiefe des Bearbeitungswerkzeugs 18b ist mittels der Schnitttiefeneinstelleinheit 36b einstellbar. Das Anzeigeelement 14b weist in zumindest einem Betriebszustand zu einer Anzeige der Position der Schnittkante eine zumindest im Wesentlichen quer zu einer Bewegungsebene des Anzeigeelements 14b verlaufende Schnittkantenanzeigelinie 20b auf.

Ferner weist die Anzeigeeinheit 16b zumindest ein weiteres beweglich gelagertes Anzeigeelement 22b auf, das in zumindest einem Betriebszustand zu einer Anzeige zumindest einer Position einer weiteren Schnittkante des Bearbeitungswerkzeugs 18b eine weitere zumindest im Wesentlichen quer zu einer Bewegungsebene des weiteren Anzeigeelements 22b verlaufende Schnittkantenanzeigelinie 24b aufweist. Die Anzeigeeinheit 16b ist als Laseranzeigeeinheit ausgebildet. Das Anzeigeelement 14b und das weitere Anzeigeelement 22b sind somit als Laseranzeigeelemente ausgebildet. Das Anzeigeelement 14b bildet in zumindest einem Betriebszustand zu einer Anzeige der Position der Schnittkante die zumindest im Wesentlichen quer zu einer Bewegungsebene des Anzeigeelements 14b und/oder zumindest im Wesentlichen quer zu einer Schnittebene des Bearbeitungswerkzeugs 18b verlaufende Schnittkantenanzeigelinie 20b auf dem zu bearbeitenden Werkstück 40b ab. Die Schnittkantenanzeigelinie 20b des Anzeigeelements 14b wird hierbei von einer Laserlinie gebildet. Das weitere Anzeigeelement 22b bildet in zumindest einem Betriebszustand zu einer Anzeige der Position der Schnittkante die weitere zumindest im Wesentlichen quer zu einer Bewegungsebene des weiteren Anzeigeelements 22b und/oder zumindest im Wesentlichen quer zur Schnittebene des Bearbeitungswerkzeugs 18b verlaufende Schnittkantenanzeigelinie 24b auf dem zu bearbeitenden Werkstück 40b ab. Die Schnittkantenanzeigelinie 24b des weiteren Anzeigeelements 22b wird ebenfalls von einer Laserlinie gebildet. Das Anzeigeelement 14b und das weitere Anzeigeelement 22b sind translatorisch beweglich an einem Längsführungselement 68b der Schnittlängenanzeigevorrichtung 10b gelagert. Das Längsführungselement 68b ist als Führungsstange ausgebildet, an dem das Anzeigeelement 14b und das weitere Anzeigeelement 22b translatorisch beweglich gelagert sind. Ferner verläuft das Längsführungselement 68b in einem an der tragbaren Werkzeugmaschine 12b angeordneten Zustand der Schnittlängenanzeigevorrichtung 10b zumindest im Wesentlichen parallel zu einer Auflagefläche 70b einer Auflageeinheit 48b der tragbaren Werkzeugmaschine 12b. Die tragbare Werkzeugmaschine 12b liegt während einer Bearbeitung eines Werkstücks mit der Auflagefläche 70b auf einer Werkstückoberfläche des Werkstücks oder auf einer Oberfläche einer als Führungsschiene ausgebildeten Werkzeugmaschinenführungsvorrichtung (hier nicht näher dargestellt) auf.

Des Weiteren umfasst die Schnittlängenanzeigevorrichtung 10b zumindest eine Bewegungskopplungseinheit 26b, die das Anzeigeelement 14b und das weitere Anzeigeelement 22b der Anzeigeeinheit 16b bewegungsabhängig miteinander verbindet. Die Bewegungskopplungseinheit 26b ist als Parallelogrammbewegungskopplungseinheit ausgebildet. Hierbei umfasst die Bewegungskopplungseinheit 26b zumindest ein Bewegungskopplungselement 28b, das mit einem Ende schwenkbar an der Auflageeinheit 48b und/oder einer Schutzeinheit 50b der tragbaren Werkzeugmaschine 12b gelagert ist. Eine Schwenkachse des Bewegungskopplungselements 28b verläuft koaxial zu einer Tauchschwenkachse 52b eines Werkzeugmaschinengehäuses 44b der tragbaren Werkzeugmaschine 12b. Mit einem weiteren Ende des Bewegungskopplungselements 28b ist das Bewegungskopplungselement 28b mit einem Schnitttiefeneinstellelement 38b der Schnitttiefeneinstelleinheit 36b verbunden. Das Schnitttiefeneinstellelement 38b ist zu einer Einstellung einer Schnitttiefe des Bearbeitungswerkzeugs 18b beweglich an einem Führungsbahnelement 58b der Schnitttiefeneinstelleinheit 36b gelagert (Figur 6). Somit weist die Schnitttiefeneinstelleinheit 36b zumindest das beweglich gelagerte Schnitttiefeneinstellelement 38b auf, das mit dem Bewegungskopplungselement 28b der Bewegungskopplungseinheit 26b der Schnittlängenanzeigevorrichtung 10b verbunden ist. Das Führungsbahnelement 58b ist an einer dem Werkzeugmaschinengehäuse 44a zugewandten Seite der Schutzeinheit 50b der tragbaren Werkzeugmaschine 12b angeordnet. Bei einer Bewegung des Schnitttiefeneinstellelements 38b relativ zum Führungsbahnelement 58b wird das Bewegungskopplungselement 28b infolge der Verbindung mit dem Schnitttiefeneinstellelement 38b ebenfalls relativ zum Führungsbahnelement 58b entlang eines Verlaufs des Führungsbahnelements 58b bewegt. Die Schnittlängenanzeigevorrichtung 10b kann hierbei zu einem Schutz der Bewegungskopplungseinheit 26b und/oder der Anzeigeeinheit 16b mittels einer Abdeckhaube abgedeckt sein.

Ferner umfasst die Bewegungskopplungseinheit 26b ein weiteres Bewegungskopplungselement 72b, das schwenkbar an der Auflageeinheit 48b und/oder der Schutzeinheit 50b gelagert ist. Eine Schwenkachse 74b des weiteren Bewegungskopplungselements 72b verläuft zumindest im Wesentlichen parallel zur Schwenkachse des Bewegungskopplungselements 28b bzw. zur Tauchschwenkachse 52b. Das Bewegungskopplungselement 28b und das weitere Bewegungskopplungselement 72b sind, betrachtet entlang einer Längserstreckung des weiteren Bewegungskopplungselements 72b, zumindest im Wesentlichen parallel zueinander ausgerichtet. Zudem sind das Bewegungskopplungselement 28b und das weitere Bewegungskopplungselement 72b mittels eines Verbindungselements 76b der Bewegungskopplungseinheit 26b miteinander verbunden. Das Verbindungselement 76b ist als Verbindungsstange ausgebildet. Hierbei ist das Verbindungselement 76b drehbar am Bewegungskopplungselement 28b gelagert. Zudem ist das Verbindungselement 76b drehbar am weiteren Bewegungskopplungselement 72b gelagert. Eine maximale Längserstreckung des Verbindungselements 76b entspricht hierbei einem sich entlang einer zumindest im Wesentlichen senkrecht zur Auflagefläche 70b verlaufenden Richtung erstreckenden Abstand zwischen der Schwenkachse des Bewegungskopplungselements 28b und der Schwenkachse 74b des weiteren Bewegungskopplungselements 72b. Ferner entspricht ein Abstand zwischen dem Längsführungselement 68b und der Auflagefläche 70b der Auflageeinheit 48b ebenfalls dem sich entlang einer zumindest im Wesentlichen senkrecht zur Auflagefläche 70b verlaufenden Richtung erstreckenden Abstand zwischen der Schwenkachse des Bewegungskopplungselements 28b und der Schwenkachse 74b des weiteren Bewegungskopplungselements 72b.

Des Weiteren umfasst die Bewegungskopplungseinheit 26b zumindest ein Führungselement 30b, das schwenkbar am weiteren Bewegungskopplungselement 72b gelagert ist (Figur 6). Das Führungselement 30b ist zudem schwenkbar am Anzeigeelement 14b gelagert. Ferner umfasst die Bewegungskopplungseinheit 26b zumindest ein weiteres Führungselement 56b, das schwenkbar am weiteren Bewegungskopplungselement 72b gelagert ist (Figur 6). Hierbei sind das Führungselement 30b und das weitere Führungselement 56b im selben Lagerpunkt schwenkbar am weiteren Bewegungskopplungselement 72b gelagert (Figur 6). Das weitere Führungselement 56b ist ferner schwenkbar am weiteren Anzeigeelement 22b gelagert. Ein Abstand zwischen dem Lagerpunkt und der Schwenkachse 74b des weiteren Bewegungskopplungselement 72b entspricht hinsichtlich eines Maßes einem Abstand zwischen der Tauchschwenkachse 52b und einer Rotationsachse einer Abtriebswelle der tragbaren Werkzeugmaschine 12b bzw. einem Mittelpunkt des als Kreissägeblatt ausgebildeten Bearbeitungswerkzeugs 18b, das an einer Werkzeugaufnahme der tragbaren Werkzeugmaschine 12b angeordnet ist.

Infolge eines Einstellens einer gewünschten maximalen Schnitttiefe des Bearbeitungswerkzeugs 18b mittels der Schnitttiefeneinstelleinheit 36b werden das Anzeigeelement 14b und das weitere Anzeigeelement 22b relativ zueinander bewegt. Hierbei wird durch das Bewegungskopplungselement 28b eine Bewegung des Schnitttiefeneinstellelements 38b relativ zum Führungsbahnelement 58b abgegriffen. Das Bewegungskopplungselement 28b wird somit zusammen mit dem Schnitttiefeneinstellelement 38b relativ zum Führungsbahnelement 58b bewegt. Hierbei wird die Bewegung des Bewegungskopplungselements 28b mittels der Verbindung des Bewegungskopplungselements 28b und des weiteren Bewegungskopplungselements 72b mittels des Verbindungselements 76b sowie der Verbindung des Führungselements 30b und des weiteren Führungselements 56b mit dem weiteren Bewegungskopplungselement 72b auf das Anzeigeelement 14b und das weitere Anzeigeelement 22b übertragen. Infolge der translatorisch beweglichen Lagerung des Anzeigeelements 14b und des weiteren Anzeigeelements 22b am Längsführungselement 68b werden das Anzeigeelement 14b und das weitere Anzeigeelement 22b in Abhängigkeit einer Bewegung des Schnitttiefeneinstellelements 38b bewegt. Hinsichtlich weiterer Merkmale der tragbaren Werkzeugmaschine 12b und/oder der Schnittlängenanzeigevorrichtung 10b darf auf die in den Figuren 1 bis 4 beschriebene tragbare Werkzeugmaschine 12a und/oder Schnittlängenanzeigevorrichtung 10a verwiesen werden.

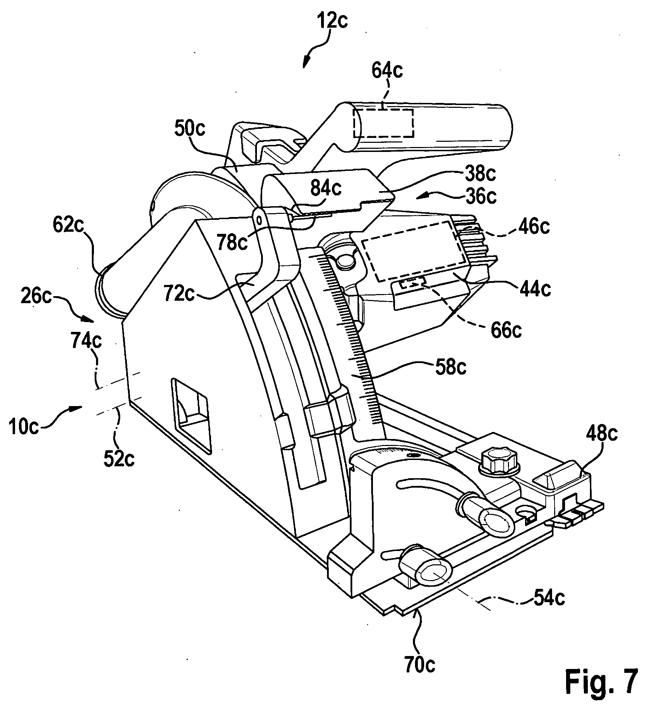

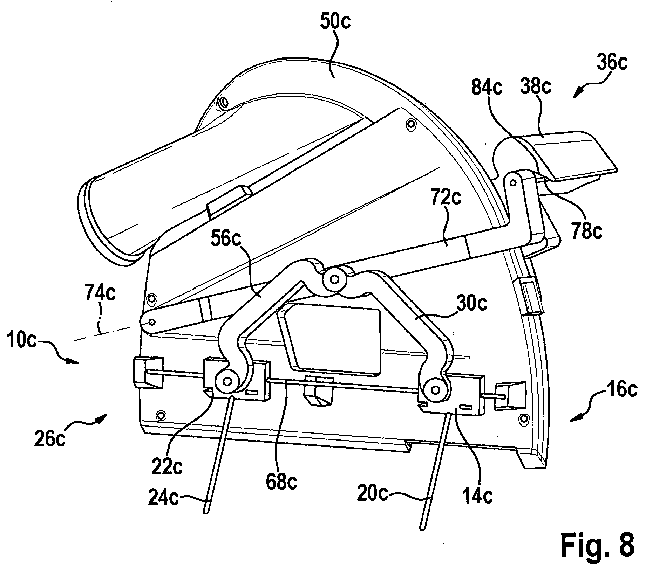

Figur 7 zeigt eine als Tauchkreissäge ausgebildete tragbare Werkzeugmaschine 12c, die zumindest eine Schnitttiefeneinstelleinheit 36c zu einer Einstellung einer Schnitttiefe eines Bearbeitungswerkzeugs 18c und zumindest eine Schnittlängenanzeigevorrichtung 10c umfasst. Die tragbare Werkzeugmaschine 12c weist eine zumindest im Wesentlichen analoge Ausgestaltung zu der in den Figuren 1 bis 4 beschriebenen tragbaren Werkzeugmaschine 12a auf. Die Schnittlängenanzeigevorrichtung 10c für die tragbare Werkzeugmaschine 12c umfasst zumindest eine zumindest ein beweglich gelagertes Anzeigeelement 14c umfassende Anzeigeeinheit 16c zu einer Anzeige zumindest einer Position einer Schnittkante des Bearbeitungswerkzeugs 18c auf einem zu bearbeitenden Werkstück (hier nicht näher dargestellt) in Abhängigkeit einer eingestellten Schnitttiefe des Bearbeitungswerkzeugs 18c. Ferner umfasst die Anzeigeeinheit 16c zumindest ein weiteres beweglich gelagertes Anzeigeelement 22c, das in zumindest einem Betriebszustand zu einer Anzeige zumindest einer Position einer weiteren Schnittkante des Bearbeitungswerkzeugs 18c eine weitere zumindest im Wesentlichen quer zu einer Bewegungsebene des weiteren Anzeigeelements 22c verlaufende Schnittkantenanzeigelinie 24c aufweist (Figur 8). Das Anzeigeelement 14c und das weitere Anzeigeelement 22c weisen eine zu den in den Figuren 1 bis 4 beschriebenen Anzeigeelementen 14a, 22a analoge Ausgestaltung auf. Ferner sind das Anzeigeelement 14c und das weitere Anzeigeelements 22c translatorisch beweglich an einem Längsführungselement 68c der Schnittlängenanzeigevorrichtung 10c gelagert (Figur 8).

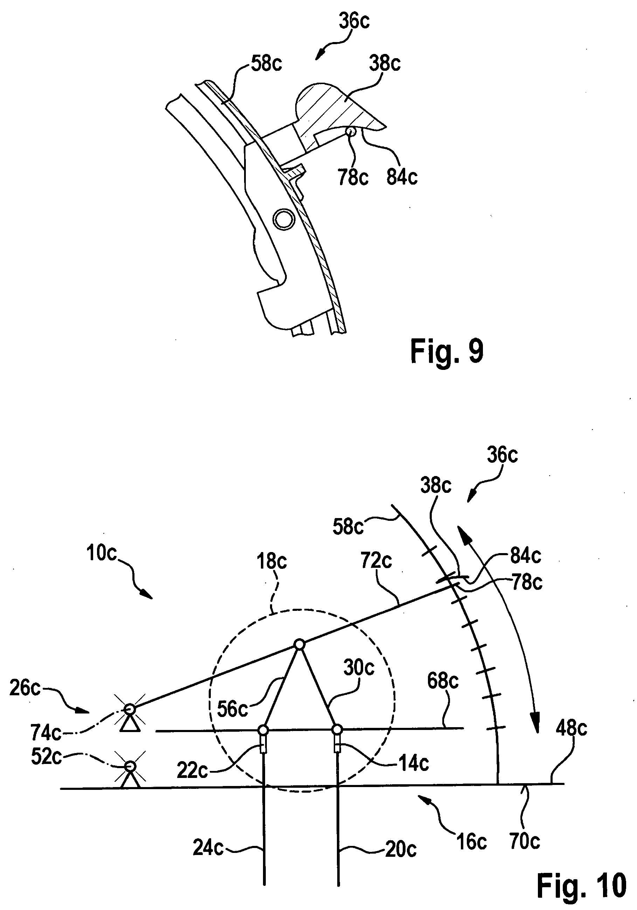

Des Weiteren umfasst die Schnittlängenanzeigevorrichtung 10c zumindest eine Bewegungskopplungseinheit 26c, die das Anzeigeelement 14c und das weitere Anzeigeelement 22c der Anzeigeeinheit 16c bewegungsabhängig miteinander verbindet. Die Bewegungskopplungseinheit 26c umfasst zumindest ein Bewegungskopplungselement 28c, das mit einem Ende schwenkbar an einer Auflageeinheit 48c und/oder an einer Schutzeinheit 50c der tragbaren Werkzeugmaschine 12c gelagert ist. Eine Schwenkachse des Bewegungskopplungselements 28c verläuft zumindest im Wesentlichen parallel zu einer Tauchschwenkachse 52c eines Werkzeugmaschinengehäuses 44c der tragbaren Werkzeugmaschine 12c. Hierbei ist die Schwenkachse des Bewegungskopplungselements 28c, betrachtet entlang einer zumindest im Wesentlichen senkrecht zu einer Auflagefläche 70c der Auflageeinheit 48c verlaufenden Richtung, relativ zur Tauchschwenkachse 52c in Richtung eines an der Schutzeinheit 50c angeordneten Absaugkopplungselements 62c versetzt angeordnet. Mit einem weiteren Ende des Bewegungskopplungselements 28c ist das Bewegungskopplungselement 28c mit einem Schnitttiefeneinstellelement 38c der Schnitttiefeneinstelleinheit 36c mittels einer kraftschlüssigen und/oder mittels einer formschlüssigen Verbindung verbunden. Hierbei weist das Schnitttiefeneinstellelement 38c zumindest eine Kurvengeometrie 84c auf, an der ein am Bewegungskopplungselement 28c angeordnetes Abgreiferelement 78c der Bewegungskopplungseinheit 26c in zumindest einem Zustand anliegt (Figur 9). Es ist jedoch auch denkbar, dass die Kurvengeometrie 84c am Bewegungskopplungselement 28c angeordnet ist und das Abgreiferelement 78c am Schnitttiefeneinstellelement 38c angeordnet ist. Die Verbindung des Bewegungskopplungselements 28c und des Schnitttiefeneinstellelements 38c mittels der Kurvengeometrie 84c und des Abgreiferelements 78c der Bewegungskopplungseinheit 26c ist zu einer Kompensation eines Abstands zwischen einem Rotationszentrum des Schnitttiefeneinstellelements 38c, das auf der Tauchschwenkachse 52c angeordnet ist, und einem Rotationszentrum des Bewegungskopplungselements 28c, das auf der Schwenkachse des Bewegungskopplungselements 28c angeordnet ist, vorgesehen.

Eine Ausgestaltung der Kurvengeometrie ist abhängig von einem durch eine Bewegung des Bewegungskopplungselements 28c bedingten Kurvenverlauf eines auf dem Bewegungskopplungselements 28c angeordneten körperfesten Punkts und von einem durch eine Bewegung des Schnitttiefeneinstellelements 38c bedingten Kurvenverlauf eines auf dem Schnitttiefeneinstellelements 38c angeordneten körperfesten Punkts. Zur Ausgestaltung der Kurvengeometrie 84c wird ein minimaler Abstand zwischen den beiden Punkten sowie ein Winkel zwischen einer durch beide Punkte verlaufenden Geraden relativ zur Auflagefläche 70c bzw. zu einer Horizontalen ermittelt. Anschließend kann hieraus mittels einer Analyse von unterschiedlichen Vektoren die Ausgestaltung der Kurvengeometrie 84c festgelegt werden.

Des Weiteren umfasst die Bewegungskopplungseinheit 26c zumindest ein Führungselement 30c, das schwenkbar am weiteren Bewegungskopplungselement 72c gelagert ist (Figuren 8 und 10). Das Führungselement 30c ist zudem schwenkbar am Anzeigeelement 14c gelagert. Ferner umfasst die Bewegungskopplungseinheit 26c zumindest ein weiteres Führungselement 56c, das schwenkbar am weiteren Bewegungskopplungselement 72c gelagert ist (Figuren 8 und 10). Hierbei sind das Führungselement 30c und das weitere Führungselement 56c im selben Lagerpunkt schwenkbar am weiteren Bewegungskopplungselement 72c gelagert (Figuren 8 und 10). Das weitere Führungselement 56c ist ferner schwenkbar am weiteren Anzeigeelement 22c gelagert.

Infolge eines Einstellens einer gewünschten maximalen Schnitttiefe des Bearbeitungswerkzeugs 18b mittels der Schnitttiefeneinstelleinheit 36b gleitet das Abgreiferelement 78c an der Kurvengeometrie 84c sobald das Schnitttiefeneinstellelement 38c bewegt wird und das Abgreiferelement 78c an der Kurvengeometrie 84c sich berühren. Hierdurch wird mittels eines Zusammenwirkens des Bewegungskopplungselements 28c, des Führungselements 30c und des weiteren Führungselements 56c das Anzeigeelement 14c und das weitere Anzeigeelement 22c bewegt. Infolge der translatorisch beweglichen Lagerung des Anzeigeelements 14c und des weiteren Anzeigeelements 22c am Längsführungselement 68c werden das Anzeigeelement 14c und das weitere Anzeigeelement 22c in Abhängigkeit einer Bewegung des Schnitttiefeneinstellelements 38c bewegt. Hinsichtlich weiterer Merkmale der tragbaren Werkzeugmaschine 12c und/oder der Schnittlängenanzeigevorrichtung 10c darf auf die in den Figuren 1 bis 4 beschriebene tragbare Werkzeugmaschine 12a und/oder Schnittlängenanzeigevorrichtung 10a verweisen werden.

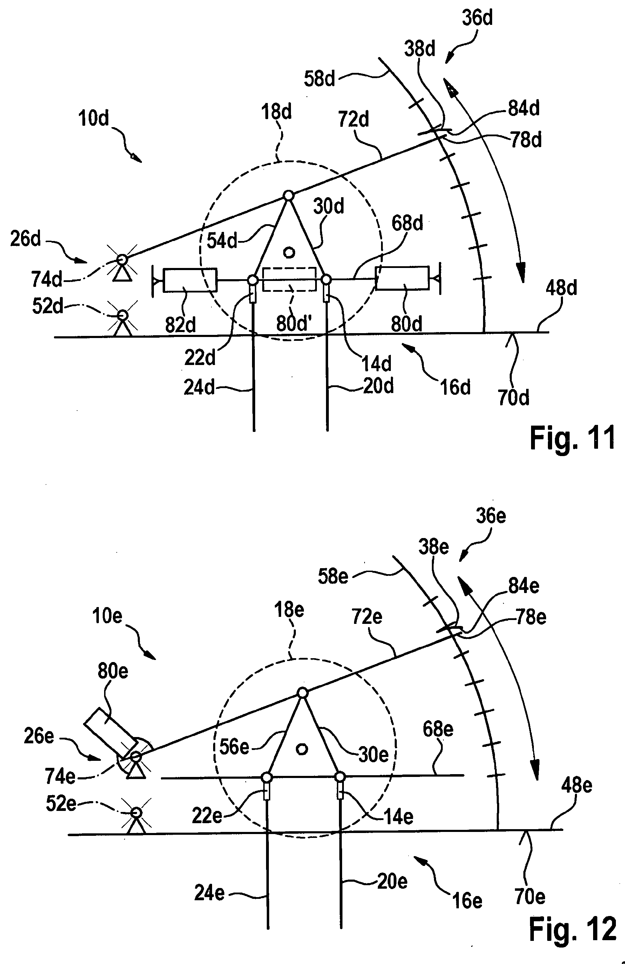

Figur 11 zeigt eine Prinzipskizze einer weiteren, alternativen erfindungsgemäßen Schnittlängenanzeigevorrichtung 10d. Die Schnittlängenanzeigevorrichtung 10d weist eine zu der in den Figuren 7 bis 10 beschriebenen Schnittlängenanzeigevorrichtung 10c zumindest im Wesentlichen analoge Ausgestaltung aus. Die Schnittlängenanzeigevorrichtung 10d weist im Unterschied zu Schnittlängenanzeigevorrichtung 10c eine Bewegungskopplungseinheit 26d auf, die zumindest ein Federelement 80d aufweist. Ferner weist die Bewegungskopplungseinheit 26d ein weiteres Federelement 82d auf. Das Federelement 80d und das weitere Federelement 82d sind als Druckfedern ausgebildet. Hierbei wirkt eine Federkraft des Federelements 80d auf ein Anzeigeelement 14d einer Anzeigeeinheit 16d der Schnittlängenanzeigevorrichtung 10d und eine Federkraft des weiteren Federelements 82d wirkt auf ein weiteres Anzeigeelement 22d der Anzeigeeinheit 16d. Das Anzeigeelement 14d und das weitere Anzeigeelement 22d sind translatorisch beweglich an einem Längsführungselement 68d der Schnittlängenanzeigevorrichtung 10d gelagert. Mittels des Federelements 80d und des weiteren Federelements 82d wird ein Toleranz- und/oder Spielausgleich der Schnittlängenanzeigevorrichtung 10d ermöglicht. Zudem wird sichergestellt, dass ein Abgreiferelement 78d eines Bewegungskopplungselements 28d der Bewegungskopplungseinheit 26d in zumindest einem Zustand sicher an einer Kurvengeometrie 84d eines Schnitttiefeneinstellelements 38d einer Schnitttiefeneinstelleinheit 36d der Schnittlängenanzeigevorrichtung 10d anliegt.

Das Federelement 80d stützt sich mit einem Ende an einem Randbereich des Längsführungselements 68d ab und mit einem weiteren Ende stützt sich das Federelement 80d an einer dem weiteren Anzeigeelement 22d abgewandten Seite des Anzeigeelements 14d am Anzeigeelement 14d ab. Das weitere Federelement 82d stützt sich mit einem Ende an einem weiteren Randbereich des Längsführungselements 68d ab und mit einem weiteren Ende stützt sich das weitere Federelement 82d an einer dem Anzeigeelement 14d abgewandten Seite des weiteren Anzeigeelements 22d am weiteren Anzeigeelement 22d ab. Es ist jedoch auch denkbar, dass die Bewegungskopplungseinheit 26d alternativ zu dem Federelement 80d und dem weiteren Federelement 82d ein einzelnes Federelement 80d' (in Figur 11 gestrichelt dargestellt) umfasst, das zwischen dem Anzeigeelement 14d und dem weiteren Anzeigeelement 22d angeordnet ist, wobei das einzelne Federelement als Zugfeder ausgebildet ist.

Figur 12 zeigt eine Prinzipskizze einer weiteren, alternativen erfindungsgemäßen Schnittlängenanzeigevorrichtung 10e. Die Schnittlängenanzeigevorrichtung 10e weist eine zu der in den Figuren 7 bis 10 beschriebenen Schnittlängenanzeigevorrichtung 10c zumindest im Wesentlichen analoge Ausgestaltung aus. Die Schnittlängenanzeigevorrichtung 10e weist im Unterschied zu Schnittlängenanzeigevorrichtung 10c eine Bewegungskopplungseinheit 26e auf, die zumindest ein Federelement 80e aufweist. Das Federelement 80e ist als Torsionsfeder ausgebildet, das an einer Schwenkachse eines Bewegungskopplungselements 28e der Bewegungskopplungseinheit 26e angeordnet ist und das Bewegungskopplungselement 28e mit einer Federkraft beaufschlagt.

## Patentansprüche

1. Schnittlängenanzeigevorrichtung für eine tragbare Werkzeugmaschine, mit zumindest einer zumindest ein beweglich gelagertes Anzeigeelement (14a; 14b; 14c; 14d; 14e) umfassenden Anzeigeeinheit (16a; 16b; 16c; 16d; 16e) zu einer Anzeige zumindest einer Position einer Schnittkante eines Bearbeitungswerkzeugs (18a; 18b; 18c; 18d; 18e) auf einem zu bearbeitenden Werkstück (40a) in Abhängigkeit einer eingestellten Schnitttiefe des Bearbeitungswerkzeugs (18a; 18b; 18c; 18d; 18e), **dadurch gekennzeichnet, dass** das Anzeigeelement (14a; 14b; 14c; 14d; 14e) in zumindest einem Betriebszustand zu einer Anzeige der Position der Schnittkante eine zumindest im Wesentlichen quer zu einer Bewegungsebene des Anzeigeelements (14a; 14b; 14c; 14d; 14e) verlaufende Schnittkantenanzeigelinie (20a; 20b; 20c; 20d; 20e) auf das Werkstück (40a) abbildet, wobei die Schnittkantenanzeigelinie (20a; 20b; 20c; 20d; 20e) von einem von dem Anzeigeelement (14a; 14b; 14c; 14d; 14e) erzeugten bzw. projizierten Lichtstrahl, insbesondere von einem von dem Anzeigeelement (14a; 14b; 14c; 14d; 14e) erzeugten bzw. projizierten Laserstrahl gebildet ist.

2. Schnittlängenanzeigevorrichtung nach Anspruch 1, **dadurch gekennzeichnet dass** die Anzeigeeinheit (16a; 16b; 16c; 16d; 16e) zumindest ein weiteres beweglich gelagertes Anzeigeelement (22a; 22b; 22c; 22d; 22e) aufweist, das in zumindest einem Betriebszustand zu einer Anzeige zumindest einer Position einer weiteren Schnittkante des Bearbeitungswerkzeugs (18a; 18b; 18c; 18d; 18e) eine weitere zumindest im Wesentlichen quer zu einer Bewegungsebene des weiteren Anzeigeelements (22a; 22b; 22c; 22d; 22e) verlaufende Schnittkantenanzeigelinie (24a; 24b; 24c; 24d; 24e) auf das Werkstück (40a) abbildet, wobei die Schnittkantenanzeigelinie (24a; 24b; 24c; 24d; 24e) von einem von dem Anzeigeelement (22a; 22b; 22c; 22d; 22e) erzeugten bzw. projizierten Lichtstrahl, insbesondere von einem von dem Anzeigeelement (22a; 22b; 22c; 22d; 22e) erzeugten bzw. projizierten Laserstrahl gebildet ist.

3. Schnittlängenanzeigevorrichtung nach einem der vorhergehenden Ansprüche, **gekennzeichnet durch** zumindest eine Bewegungskopplungseinheit (26a; 26b; 26c; 26d; 26e), die das Anzeigeelement (14a; 14b; 14c; 14d; 14e) und ein weiteres Anzeigeelement (22a; 22b; 22c; 22d; 22e) der Anzeigeeinheit (16a; 16b; 16c; 16d; 16e) bewegungsabhängig miteinander verbindet.

4. Schnittlängenanzeigevorrichtung nach einem der vorhergehenden Ansprüche, **gekennzeichnet durch** zumindest eine Bewegungskopplungseinheit (26a; 26b; 26c; 26d; 26e) die zumindest ein Bewegungskopplungselement (28a; 28b; 28c; 28d; 28e) aufweist, das gelenkig mit einem Führungselement (30a; 30b; 30c; 30d; 30e) der Bewegungskopplungseinheit (26a; 26b; 26c; 26d; 26e) verbunden ist, an dem das Anzeigeelement (14a; 14b; 14c; 14d; 14e) angeordnet ist.

5. Schnittlängenanzeigevorrichtung nach Anspruch 4, **dadurch gekennzeichnet, dass** das Führungselement (30a) mit einem vom Bewegungskopplungselement (28a) abgewandten Ende in zumindest einer Führungsausnehmung (32a) der Bewegungskopplungseinheit (26a) geführt ist.

6. Schnittlängenanzeigevorrichtung nach einem der vorhergehenden Ansprüche, **gekennzeichnet durch** zumindest eine Bewegungskopplungseinheit (26a), die zumindest eine Führungsausnehmung (32a, 34a) umfasst, die einen bogenförmigen Verlauf aufweist.

7. Schnittlängenanzeigevorrichtung nach einem der vorhergehenden Ansprüche, **dadurch gekennzeichnet, dass** die Anzeigeeinheit (16a; 16b; 16c; 16d; 16e) als Laseranzeigeeinheit ausgebildet ist.

8. Tragbare Werkzeugmaschine, insbesondere Kreissäge, mit zumindest einer Schnitttiefeneinstelleinheit (36a; 36b; 36c, 36d; 36e) zu einer Einstellung einer Schnitttiefe eines Bearbeitungswerkzeugs (18a; 18b; 18c; 18d; 18e) und mit zumindest einer Schnittlängenanzeigevorrichtung nach einem der vorhergehenden Ansprüche.

9. Tragbare Werkzeugmaschine nach Anspruch 8, **dadurch gekennzeichnet, dass** die Schnittlängenanzeigevorrichtung zumindest eine Bewegungskopplungseinheit (26a; 26b; 26c; 26d; 26e) umfasst, die dazu vorgesehen ist, zumindest das Anzeigeelement (14a; 14b; 14c; 14d; 14e) in Abhängigkeit einer Bewegung eines Schnitttiefeneinstellelements (38a; 38b; 38c; 38d; 38e) der Schnitttiefeneinstelleinheit (36a; 36b; 36c, 36d; 36e) zu bewegen.

10. Tragbare Werkzeugmaschine nach Anspruch 8 oder 9, **dadurch gekennzeichnet, dass** die Schnitttiefeneinstelleinheit (36a; 36b; 36c, 36d; 36e) zumindest ein beweglich gelagertes Schnitttiefeneinstellelement (38a; 38b; 38c; 38d; 38e) umfasst, das mit einem Bewegungskopplungselement (28a; 28b; 28c, 28d; 28e) einer Bewegungskopplungseinheit (26a; 26b; 26c; 26d; 26e) der Schnittlängenanzeigevorrichtung verbunden ist.

## Claims

1. Cut length indicating device for a portable machine tool, with at least one indicating unit (16a; 16b; 16c; 16d; 16e), which comprises at least one movably mounted indicating element (14a; 14b; 14c; 14d; 14e), for indicating at least one position of a cutting edge of a machining tool (18a; 18b; 18c; 18d; 18e) on a workpiece (40a), which is to be machined, in dependence on a set depth of cut of the machining tool (18a; 18b; 18c; 18d; 18e), **characterized in that**, in at least one operating state, for indicating the position of the cutting edge, the indicating element (14a; 14b; 14c; 14d; 14e) depicts a cutting edge indicating line (20a; 20b; 20c; 20d; 20e) running at least substantially transversely with respect to a plane of movement of the indicating element (14a; 14b; 14c; 14d; 14e) on the workpiece (40a), wherein the cutting edge indicating line (20a; 20b; 20c; 20d; 20e) is formed by a light beam produced and projected by the indicating element (14a; 14b; 14c; 14d; 14e), in particular by a laser beam produced and projected by the indicating element (14a; 14b; 14c; 14d; 14e).

2. Cut length indicating device according to Claim 1, **characterized in that** the indicating unit (16a; 16b; 16c; 16d; 16e) has at least one further movably mounted indicating element (22a; 22b; 22c; 22d; 22e) which, in at least one operating state, for indicating at least one position of a further cutting edge of the machining tool (18a; 18b; 18c; 18d; 18e), depicts a further cutting edge indicating line (24a; 24b; 24c; 24d; 24e) running at least substantially transversely with respect to a plane of movement of the further indicating element (22a; 22b; 22c; 22d; 22e) on the workpiece (40a), wherein the cutting edge indicating line (24a; 24b; 24c; 24d; 24e) is formed by a light beam produced and projected by the indicating element (22a; 22b; 22c; 22d; 22e), in particular by a laser beam produced and projected by the indicating element (22a; 22b; 22c; 22d; 22e).

3. Cut length indicating device according to either of the preceding claims, **characterized by** at least one movement coupling unit (26a; 26b; 26c; 26d; 26e) which connects the indicating element (14a; 14b; 14c; 14d; 14e) and a further indicating element (22a; 22b; 22c; 22d; 22e) of the indicating unit (16a; 16b; 16c; 16d; 16e) to each other in a motionally dependent manner.

4. Cut length indicating device according to one of the preceding claims, **characterized by** at least one movement coupling unit (26a; 26b; 26c; 26d; 26e) which has at least one movement coupling element (28a; 28b; 28c; 28d; 28e) which is connected in an articulated manner to a guide element (30a; 30b; 30c; 30d; 30e) of the movement coupling unit (26a; 26b; 26c; 26d; 26e), on which guide element the indicating element (14a; 14b; 14c; 14d; 14e) is arranged.

5. Cut length indicating device according to Claim 4, **characterized in that** the guide element (30a) is guided at one end, which faces away from the movement coupling element (28a), in at least one guide recess (32a) of the movement coupling unit (26a).

6. Cut length indicating device according to one of the preceding claims, **characterized by** at least one movement coupling unit (26a) which comprises at least one guide recess (32a; 34a) which has a curved profile.

7. Cut length indicating device according to one of the preceding claims, **characterized in that** the indicating unit (16a; 16b; 16c; 16d; 16e) is designed as a laser indicating unit.

8. Portable machine tool, in particular circular saw with at least one cut depth setting unit (36a; 36b; 36c; 36d; 36e) for setting a depth of cut of a machining tool (18a; 18b; 18c; 18d; 18e) and with at least one cut length indicating device according to one of the preceding claims.

9. Portable machine tool according to Claim 8, **characterized in that** the cut length indicating device comprises at least one movement coupling unit (26a; 26b; 26c; 26d; 26e) which is provided for moving at least the indicating element (14a; 14b; 14c; 14d; 14e) in dependence on a movement of a cut depth setting element (38a; 38b; 38c; 38d; 38e) of the cut depth setting unit (36a; 36b; 36c; 36d; 36e).

10. Portable machine tool according to Claim 8 or 9, **characterized in that** the cut depth setting unit (36a; 36b; 36c; 36d; 36e) comprises at least one movably mounted cut depth setting element (38a; 38b; 38c; 38d; 38e) which is connected to a movement coupling element (28a; 28b; 28c; 28d; 28e) of a movement coupling unit (26a; 26b; 26c; 26d; 26e) of the cut length indicating device.

## Revendications

1. Dispositif indicateur de longueur de coupe pour une machine-outil portative, avec au moins une unité indicatrice (16a ; 16b ; 16c ; 16d ; 16e) comprenant au moins un élément indicateur (14a ; 14b ; 14c ; 14d ; 14e) monté de manière mobile pour une indication d'au moins une position d'une arête de coupe d'un outil d'usinage (18a ; 18b ; 18c ; 18d ; 18e) sur une pièce à usiner (40a) devant être usinée en fonction d'une profondeur de coupe réglée de l'outil d'usinage (18a ; 18b ; 18c ; 18d ; 18e), **caractérisé en ce que**, dans au moins un état de fonctionnement, pour une indication de la position de l'arête de coupe, l'élément indicateur (14a ; 14b ; 14c ; 14d ; 14e) représente sur la pièce à usiner (40a) une ligne indicatrice d'arête de coupe (20a ; 20b ; 20c ; 20d ; 20e) au moins sensiblement transversale à un plan de déplacement de l'élément indicateur (14a ; 14b ; 14c ; 14d ; 14e), dans lequel la ligne indicatrice d'arête de coupe (20a ; 20b ; 20c ; 20d ; 20e) est formée par un rayon lumineux généré ou projeté par l'élément indicateur (14a ; 14b ; 14c ; 14d ; 14e), en particulier par un rayon laser généré ou projeté par l'élément indicateur (14a ; 14b ; 14c ; 14d ; 14e).

2. Dispositif indicateur de longueur de coupe selon la revendication 1, **caractérisé en ce que** l'unité indicatrice (16a ; 16b ; 16c ; 16d ; 16e) présente au moins un autre élément indicateur (22a ; 22b ; 22c ; 22d ; 22e) monté de manière mobile lequel, dans au moins un état de fonctionnement, pour une indication d'au moins une position d'une autre arête de coupe de l'outil d'usinage (18a ; 18b ; 18c ; 18d ; 18e), représente sur la pièce à usiner (40a) une autre ligne indicatrice d'arête de coupe (24a ; 24b ; 24c ; 24d ; 24e) s'étendant au moins sensiblement transversalement à un plan de déplacement de l'autre élément indicateur (22a ; 22b ; 22c ; 22d ; 22e), dans lequel la ligne indicatrice d'arête de coupe (24a ; 24b ; 24c ; 24d ; 24e) est formée par un rayon lumineux généré ou projeté par l'élément indicateur (22a ; 22b ; 22c ; 22d ; 22e), en particulier par un rayon laser généré ou projeté par l'élément indicateur (22a ; 22b ; 22c ; 22d ; 22e).

3. Dispositif indicateur de longueur de coupe selon l'une des revendications précédentes, **caractérisé par** au moins une unité de couplage selon le mouvement (26a ; 26b ; 26c ; 26d, 26e) qui relie ensemble l'élément indicateur (14a ; 14b ; 14c ; 14d ; 14e) et un autre élément indicateur (22a ; 22b ; 22c ; 22d ; 22e) de l'unité indicatrice (16a ; 16b ; 16c ; 16d ; 16e) en fonction du mouvement.

4. Dispositif indicateur de longueur de coupe selon l'une des revendications précédentes, **caractérisé par** au moins une unité de couplage selon le mouvement (26a ; 26b ; 26c ; 26d, 26e) qui présente au moins un élément de couplage selon le mouvement (28a ; 28b ; 28c ; 28d ; 28e), lequel est relié de manière articulée à un élément de guidage (30a ; 30b ; 30c ; 30d ; 30e) de l'unité de couplage selon le mouvement (26a ; 26b ; 26c ; 26d, 26e) sur lequel l'élément indicateur (14a ; 14b ; 14c ; 14d ; 14e) est disposé.

5. Dispositif indicateur de longueur de coupe selon la revendication 4, **caractérisé en ce que** l'élément de guidage (30a) est guidé avec une extrémité tournant le dos à l'élément de couplage selon le mouvement (28a) dans au moins un évidement de guidage (32a) de l'unité de couplage selon le mouvement (26a).

6. Dispositif indicateur de longueur de coupe selon l'une des revendications précédentes, **caractérisé par** au moins une unité de couplage selon le mouvement (26a) qui comprend au moins un évidement de guidage (32a, 34a) présentant un tracé en forme d'arc.

7. Dispositif indicateur de longueur de coupe selon l'une des revendications précédentes, **caractérisé en ce que** l'unité indicatrice (16a ; 16b ; 16c ; 16d ; 16e) est réalisée en tant qu'unité d'indication laser.

8. Machine-outil portative, en particulier scie circulaire, avec au moins une unité de réglage de profondeur de coupe (36a ; 36b ; 36c ; 36d ; 36e) pour un réglage d'une profondeur de coupe d'un outil d'usinage (18a ; 18b ; 18c ; 18d ; 18e) et avec au moins un dispositif indicateur de longueur de coupe selon l'une des revendications précédentes.

9. Machine-outil portative selon la revendication 8, **caractérisée en ce que** le dispositif indicateur de longueur de coupe comprend au moins une unité de couplage selon le mouvement (26a ; 26b ; 26c ; 26d ; 26e) qui est prévue pour faire bouger au moins l'élément indicateur (14a ; 14b ; 14c ; 14d ; 14e) en fonction d'un mouvement d'un élément de réglage de profondeur de coupe (38a ; 38b ; 38c ; 38d ; 38e) de l'unité de réglage de profondeur de coupe (36a ; 36b ; 36c ; 36d ; 36e).

10. Machine-outil portative selon la revendication 8 ou 9, **caractérisée en ce que** l'unité de réglage de profondeur de coupe (36a ; 36b ; 36c ; 36d ; 36e) comprend au moins un élément de réglage de profondeur de coupe (38a ; 38b ; 38c ; 38d ; 38e) monté de manière mobile, lequel est relié à un élément de couplage selon le mouvement (28a ; 28b ; 28c ; 28d ; 28e) d'une unité de couplage selon le mouvement (26a ; 26b ; 26c ; 26d ; 26e) du dispositif indicateur de longueur de coupe.
